# EUROPÄISCHE PATENTSCHRIFT

(11) **EP 0 992 565 B1**
(45) Veröffentlichungstag und Bekanntmachung des Hinweises auf die Patenterteilung: **13.12.2000**
(21) Anmeldenummer: 99116719.8
(22) Anmeldetag: 26.08.1999
(51) Int. Cl.: C09K 17/40, C09K 17/36

(54) **Verfahren zur Festigung und Hydrophobierung von Bodenmaterialien**
Method for consolidation and hydrophobisation of soils
Methode de consolidation et hydrophobisation de sols

(30) Priorität: 29.09.1998 DE 19844654
(43) Veröffentlichungstag der Anmeldung: 12.04.2000
(73) Patentinhaber: Wacker-Chemie GmbH, 81737 München (DE)
(72) Erfinder: Weber, Helmut, Prof. Dr., 85560 Ebersberg (DE); Egger, Ulrike, 85598 Baldham (DE)
(74) Vertreter: Budczinski, Angelika

(56) Entgegenhaltungen:
- EP-A- 0 082 971
- EP-A- 0 234 504
- EP-A- 0 889 109
- DE-C- 3 329 403

## Beschreibung

Die Erfindung betrifft ein Verfahren zur Festigung und Hydrophobierung von tonigen und kiesigen Bodenmaterialien mit Alkalisilikaten und Alkalisiliconaten.

Es ist bereits bekannt, daß zur Bodenverfestigung hydraulisch härtende Bindemittel, wie hochhydraulische Kalke und Zemente, in Kombination mit Hydrophobierungsmitteln, wie z.B. Paraffinen, eingesetzt werden. Diese Mischungen müssen in aufwendiger Art und Weise hergestellt werden, da das Paraffin zunächst geschmolzen werden muß, um auf die hydraulischen Bindemittel aufgebracht werden zu können. Als nachteilig hat sich des weiteren herausgestellt, daß die eingesetzten Stoffe nur bedingt chemisch reaktiv sind. Paraffine sind z.B. nicht in der Lage, chemisch mit den Bestandteilen der Bodenproben zu reagieren. Es kommt hier nur zu physikalischen Abmischungen, die durchaus reversibel sind und somit nicht die Beständigkeit der durch chemische Bindung erzeugten Wirkungsweise besitzen können.

Es bestand daher die Aufgabe, die Nachteile des Standes der Technik zu vermeiden und ein Verfahren bereitzustellen, mit dem Bodenmaterialien auf einfache Art und Weise verfestigt und hydrophobiert werden können.

Gegenstand der Erfindung ist ein Verfahren zur Festigung und Hydrophobierung von Bodenmaterialien durch Behandlung von Bodenmaterialien mit Wasser, Alkalisilikaten und Alkalisiliconaten.

Bei den erfindungsgemäß behandelten Bodenmaterialien kann es sich um alle bisher bekannten Bodenmaterialien handeln, insbesondere um tonige und kiesige Bodenmaterialien.

Bei den im erfindungsgemäßen Verfahren eingesetzten Alkalisilkaten kann es sich um beliebige Alkalisilikate, wie Natrium-und Kaliumsilikate, handeln. Die Natrium- und Kaliumsalze der Kieselsäure werden auch als Wasserglas bezeichnet.

Vorzugsweise haben die erfindungsgemäß eingesetzten Alkalisilikate ein Gewichtsverhältnis von SiO₂ zu Alkalioxid, insbesondere Na₂O bzw. K₂O, von 2,3 bis 3,5, eine Dichte von 1240 bis 1535 kg/m³ und eine Viskosität von 5 bis 850 mPa^{·}s (20°C).

Bei den erfindungsgemäß eingesetzten Alkalisiliconaten handelt es sich vorzugsweise um solche aus Einheiten der Formel

R⁻ₐ(R¹O)_{b}(M⁺O⁻)_{c}SiO_{(4-a-b-c)/2} (I),

wobei R gleich oder verschieden sein kann und einwertiger SiC-gebundener organischer Rest bedeutet,
R¹ gleich oder verschieden sein kann und einwertiger, gegebenenfalls substituierter Kohlenwasserstoffrest bedeutet,
M⁺ gleich oder verschieden sein kann und Alkalimetallion oder Ammoniumion bedeutet, insbesondere Na⁺ oder K⁺,
a gleich 0, 1, 2 oder 3, bevorzugt 1, ist,
b gleich 0, 1, 2 oder 3, bevorzugt 1 oder 2, ist und
c gleich 0, 1, 2 oder 3, bevorzugt 1, ist,
mit der Maßgabe, daß die Summe aus a, b und c kleiner oder gleich 3 ist und pro Molekül mindestens ein Rest (M⁺O⁻) anwesend ist.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Bei Rest R handelt es sich bevorzugt um Kohlenwasserstoffreste mit 1 bis 12 Kohlenstoffatomen, besonders bevorzugt um den Methyl-, Ethyl- und Propylrest, insbesondere um den Methylrest.

Beispiele für Kohlenwasserstoffrest R¹ sind die für R angegebenen Reste, wobei es sich bei Rest R¹ bevorzugt um Wasserstoffatom oder Kohlenwasserstoffreste mit 1 bis 6 Kohlenstoffatomen, besonders bevorzugt um Wasserstoffatom, den Methyl- und Ethylrest, insbesondere um Wasserstoffatom, handelt.

Bevorzugt handelt es sich bei den erfindungsgemäß eingesetzten Alkalisiliconaten um solche, die bei Raumtemperatur in Wasser zumindest zum Teil löslich sind.

Besonders bevorzugt handelt es sich bei den erfindungsgemäß eingesetzten Alkalisiliconaten um wäßrige Lösungen von Kaliumalkylsiliconaten.

Die erfindungsgemäß eingesetzten Alkalisilikate und Alkalisiliconate sind handelsübliche Produkte bzw. nach in der Silicium-Chemie gängigen Methoden herstellbar.

Im erfindungsgemäßen Verfahren können Alkalisilikate und Alkalisiliconate in jedem Verhältnis eingesetzt werden. Vorzugsweise reicht das Gewichtsverhältnis von Alkalisilikat zu Alkalisiliconat von 10:1 bis 1:10, besonders bevorzugt 1:1.

Bei dem erfindungsgemäßen Verfahren wird Wasser in Mengen von vorzugsweise 10 bis 95 l, bezogen auf 100 l der Gesamtmenge an eingesetztem Wasser, Alkalisilikat und Siliconat eingesetzt, wobei eine Menge von 70 bis 90 l besonders bevorzugt ist. Da sich die Zugabe von Wasser auch nach dem Wassergehalt-der zu behandelnden Böden richtet, kann die zugegebene Wassermenge auch unterhalb oder überhalb der oben angegebenen Mengenbereiche liegen.

Bei dem erfindungsgemäßen Verfahren werden Alkalisilikat, Alkalisiliconat und Wasser in einer Gesamtmenge von vorzugsweise 1 bis 100 Gewichtsteilen, besonders bevorzugt 0,1 bis 10 Gewichtsteilen, insbesondere 0,5 bis 10 Gewichtsteilen, jeweils bezogen auf 100 Gewichtsteile der zu behandelnden Bodenmaterialien, eingesetzt.

Wasser, Alkalisilikat und Alkalisiliconat können im erfindungsgemäßen Verfahren auf beliebige Art und Weise mit dem zu behandelnden Bodenmaterial vermischt werden. Dabei. können die erfindungsgemäß eingesetzten Komponenten einzeln oder in beliebigen Mischungen eingesetzt werden.

Vorteilhafterweise wird eine Mischung aus Wasser, Alkalisilikat und Alkalisiliconat sowie gegebenenfalls Zusatzstoffen dem zu behandelnden Bodenmaterial zugegeben. Diese Mischung kann beispielsweise durch Zusatz von Kalilauge, z.B. in einer Menge von etwa 10 Gewichts-%, bezogen auf das Gesamtgewicht an eingesetztem Wasser, Alkalisilikat und Siliconat, stabilisiert werden. Die Benetzbarkeit kann außerdem durch Zusatz von Alkoholen, wie Isopropanol, beispielsweise in einer Menge von 0,5 bis 1,0 Gewichts-%, bezogen auf das Gesamtgewicht an eingesetztem Wasser, Alkalisilikat und Siliconat, verbessert werden.

Der Vorteil dieser Variante des erfindungsgemäßen Verfahrens besteht darin, daß eine derartige Flüssigkomponente wesentlich einfacher dosierbar und einmischbar ist. Des weiteren hat die erfindungsgemäß eingesetzte Mischung aus Wasser, Alkalisilikat und Alkalisiliconat sowie gegebenenfalls Zusatzstoffen den Vorteil, daß sie wasserverdünnbar ist und bei Raumtemperatur und Umgebungsdruck eine nahezu unbegrenzte Lagerstabilität zeigt.

Nach Auskofferung der Bodenschichten werden diese erfindungsgemäß mit der Mischung aus Wasser, Alkalisilikat und Alkalisiliconat sowie gegebenenfalls Zusatzstoffen versetzt. Nach Vermischen wird die Auskofferung im allgemeinen wieder eingebracht, verdichtet und verpreßt. Bereits nach kurzer Zeit ergibt sich durch die hydrophobierende Wirkung der Siliconatanteile eine sehr starke Wasserabweisung und damit eine Wasserfestigkeit der erfindungsgemäß behandelten Bodenschichten. Außerdem tritt durch das Verdichten und Verpressen und die Kieselgelbildung aus der Silikatkomponente eine starke Verfestigung der Bodenschicht auf. Bereits nach einiger Zeit können die so präparierten Böden als Straßen und Wege befahren und genutzt werden. Aufgrund der hervorragenden Wirkung des erfindungsgemäßen Verfahrens ergibt sich auch eine bessere und höhere Widerstandsfähigkeit gegen Abnutzung, wie sie sonst bei der vorgesehenen Befahrung nicht vorhanden ist.

Insbesondere die tonigen Bodenproben erhalten nach dem Verpressen und nach einer Lufttrocknung eine solch ausgezeichnete Festigkeit und Wasserbeständigkeit, daß es durchaus möglich ist, mit diesen auf einfachste Art und Weise erstellten Baustoffen einen Mauerwerksbau zu betreiben. Dies ist insbesondere von hohem Interesse für Länder, in denen die technischen und finanziellen Möglichkeiten zur Herstellung von Baustoffen, wie gebranntem Ziegel etc., nicht vorhanden sind.

Ein weiterer Vorteil des erfindungsgemäßen Verfahrens besteht darin, daß durch die chemische Reaktivität der eingesetzten Alkalikomponenten mit den Bestandteilen der Bodenproben beständige, unlösbare Verbindungen entstehen.

Das erfindungsgemäße Verfahren kann überall dort angewendet werden, wo Bodenmaterialien verfestigt und hydrophobiert werden sollen. Insbesondere kann es im Wege- und Straßenbau sowie zur Herstellung von wasserfesten Baustoffen mit einer entsprechenden Festigkeit für den einfachen Mauerwerksbau eingesetzt werden. Bei der Herstellung von Baustoffen nach dem erfindungsgemäßen Verfahren hat sich gezeigt, daß ohne Brennen und Härten der Baustoffe eine relativ hohe Festigkeit und Wasserfestigkeit erreicht wird, die den Einsatz so hergestellter Baustoffe für einfache Bauweisen, wie etwa in der Dritten Welt, möglich macht.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1

Es wird eine Mischung hergestellt aus 15 1 Kaliwasserglas mit einem Gewichtsverhältnis von SiO₂ zu Alkalioxid von 2,46 bis 2,64 (19,7-20,7% SiO₂), einer Dichte von 1240-1250 kg/m³ und einer Viskosität von 20-40 mPa·s bei 20°C (käuflich erhältlich unter der Bezeichnung 'EHST 28' bei der Fa. Henkel, Deutschland), 15 1 Kaliummethylsiliconat der durchschnittlichen Formel CH₃-Si(OH)₂O⁻K⁺ als 42%ige Lösung in Wasser (käuflich erhältlich unter der Bezeichnung WACKER BS^{®}15 bei der Wacker-Chemie GmbH, München) und 70 1 Wasser. Von dieser Mischung werden ca. 0,5 Gewichtsteile pro 100 Gewichtsteile ausgekofferte Bodenmischung zudosiert und miteinander vermischt. Anschließend wird die so erhaltene Bodenmischung wieder eingebracht, verdichtet und gepreßt. Dies kann mit üblichen Baugeräten bzw. -maschinen erfolgen.

Man erhält dann einen bereits nach wenigen Stunden verfestigten, hydrophoben Boden, der mechanisch belastbar ist und z.B. befahren werden kann.

### Beispiel 2

Es wird eine Mischung hergestellt aus 10 l des in Beispiel 1 beschriebenen Kaliwasserglases, 10 l des in Beispiel 1 beschriebenen Kaliummethylsiliconats und 80 l Wasser. 2,0 Gewichtsteile dieser Mischung sowie 7 Gewichtsteile Wasser werden pro 100 Gewichtsteile ausgekofferte Bodenmischung zudosiert und miteinander vermischt. Anschließend wird die so erhaltene Bodenmischung wieder eingebracht, verdichtet und gepreßt. Dies kann mit üblichen Baugeräten bzw. -maschinen erfolgen.

Man erhält dann einen bereits nach wenigen Stunden verfestigten, hydrophoben Boden, der mechanisch belastbar ist und z.B. befahren werden kann.

### Beispiel 3

Die in Beispiel 2 beschriebene Arbeitsweise wird wiederholt mit der Abänderung, daß anstelle von 2,0 Gewichtsteilen der Mischung aus Wasser, Silikat und Siliconat 1,0 Gewichtsteile eingesetzt werden.

Man erhält dann einen bereits nach wenigen Stunden verfestigten, hydrophoben Boden, der mechanisch belastbar ist und z.B. befahren werden kann.

### Beispiel 4

100 Gewichtsteile Bodenmaterial werden unter Rühren mit 1,0 Gewichtsteilen des in Beispiel 1 beschriebenen Wasserglases, 0,5 Gewichtsteilen Kaliummethylpropylsiliconat als ca. 40%ige Lösung in Wasser (käuflich erhältlich unter der Bezeichnung WACKER BS^{®}20 bei der Wacker-Chemie GmbH, München) und 7,5 Gewichtsteilen Wasser versetzt. Anschließend wird die so erhaltene Bodenmischung wieder eingebracht, verdichtet und gepreßt. Dies kann mit üblichen Baugeräten bzw. -maschinen erfolgen.

Man erhält dann einen bereits nach wenigen Stunden verfestigten, hydrophoben Boden, der mechanisch belastbar ist und z.B. befahren werden kann.

## Patentansprüche

1. Verfahren zur Festigung und Hydrophobierung von Bodenmaterialien durch Behandlung von Bodenmaterialien mit Wasser, Alkalisilikaten und Alkalisiliconaten.

2. Verfahren nach Anspruch 1, dadurch gekennzeichnet, daß eine Mischung aus Wasser, Alkalisilikat und Alkalisiliconat sowie gegebenenfalls Zusatzstoffen dem zu behandelnden Bodenmaterial zugegeben wird.

3. Verfahren nach Anspruch 1 oder 2, dadurch gekennzeichnet, daß Alkalisilikate und Alkalisiliconate im Gewichtsverhältnis von 10:1 bis 1:10 eingesetzt werden.

## Claims

1. Process for consolidating and hydrophobicizing soil materials by treating soil materials with water, alkali metal silicates and alkali metal siliconates.

2. Process according to Claim 1, characterized in that a mixture of water, alkali metal silicate and alkali metal siliconate, and also, if desired, additives is added to the soil material to be treated.

3. Process according to Claim 1 or 2, characterized in that the alkali metal silicates and alkali metal siliconates are used in a weight ratio of from 10:1 to 1:10.

## Revendications

1. Procédé pour consolider et rendre hydrophobes des matériaux pour le sol par traitement des matériaux pour le sol avec de l'eau, des silicates alcalins et des siliconates alcalins.

2. Procédé selon la revendication 1, caractérisé en ce qu'on ajoute un mélange constitué d'eau, de silicate alcalin et de siliconate alcalin ainsi que, le cas échéant, d'adjuvants au matériau pour le sol à traiter.

3. Procédé selon la revendication 1 ou 2, caractérisé en ce qu'on utilise des silicates alcalins et des siliconates alcalins dans un rapport pondéral de 10:1 à 1:10.
